# EUROPÄISCHE PATENTSCHRIFT

(11) **EP 3 563 126 B1**
(45) Veröffentlichungstag und Bekanntmachung des Hinweises auf die Patenterteilung: **02.12.2020**
(21) Anmeldenummer: 17825878.6
(22) Anmeldetag: 28.12.2017
(51) Int. Cl.: G01H 9/00

(54) **AKUSTIK-EMISSIONSSENSOR**
ACOUSTIC EMISSION SENSOR
CAPTEUR D'ÉMISSION ACOUSTIQUE

(30) Priorität: 28.12.2016 DE 102016125799
(43) Veröffentlichungstag der Anmeldung: 06.11.2019
(73) Patentinhaber: FOS4X GmbH, 81371 München (DE)
(72) Erfinder: MÜLLER, Mathias, 82194 Gröbenzell (DE); SCHMID, Markus, 80636 München (DE); KIENITZ, Sascha, 81547 München (DE)
(74) Vertreter: Zimmermann & Partner Patentanwälte mbB
(86) Internationale Anmeldenummer: PCT/EP2017/084737
(87) Internationale Veröffentlichungsnummer: WO 2018/122327

(56) Entgegenhaltungen:
- CN-A- 102 997 050
- DE-A1-102010 061 605
- JP-A- 2013 253 831
- JP-B2- 4 471 862
- US-A- 4 530 078

## Beschreibung

### TECHNISCHES GEBIET

Die Offenbarung betrifft einen Akustik-Emissionssensor. Akustik-Emissionssensoren kommen zur Körperschallmessungen zum Einsatz, beispielsweise für Körperschallmessungen an Festkörper-Messobjekten.

### STAND DER TECHNIK

Aus der US 5,191,796 A ist ein Akustik-Emissionssensor bekannt, welcher ein piezoelektrisches Element umfasst. Eine piezoelektrische Detektion erfordert eine elektrische Anbindung des herkömmlichen Akustik-Emissionssensors, was in bestimmten Anwendungsfällen wie z. B. in explosionsgefährdeten Umgebungen, in chemisch korrosiven Medien oder bei hohen Umgebungstemperaturen unerwünscht sein kann.

Die US 6,289,143 B1 beschreibt einen faseroptischen Akustik-Emissionssensor zur Vibrationsdetektion in einer widrigen Umgebung. Der herkömmliche Akustik-Emissionssensor umfasst zwei Einmoden-Lichtwellenleiterfasern, deren jeweils hintere Endflächen in einem Hohlkörper gegenüberliegend angeordnet sind, so dass das Licht, welches durch eine der Lichtwellenleiterfasern in Richtung ihrer hinteren Endfläche gesandt wird, an der hinteren Endfläche dieser Faser und an der Endfläche der anderen Faser teilweise reflektiert wird. Mit dem bekannten Aufbau eines Akustik-Emissionssensors ist eine direkte mechanische Kopplung an ein Festkörper-Messobjekt erschwert.

Das Dokument JP 2013 253831 A beschreibt eine Einrichtung zur Detektion von Schallanomalien. Die Einrichtung umfasst unter anderem einen Sensorteil mit einer Mehrzahl von Photoakustikmediumteilen, die mittels Lichtwellenleitern miteinander verbunden sind.

Das Dokument JP 4 471862 B2 beschreibt eine Sensoreinrichtung für elastische Wellen. Die Einrichtung umfasst eine Lichtquelle, Lichtwellenleiter für Referenzlicht, Lichtwellenleiter für an einem Testobjekt installierte Sensoren, Photodetektoren und einen Filter.

Das Dokument US 4,530,078 A beschreibt einen Faserakustiksensor mit einem Hydrophon. Das Hydrophon umfasst zwei gegenüber angeordnete Bauteile, die in Ansprechen auf eine Druckwelle ein Paar von Verformungsplatten gegen einen Lichtwellenleiter drücken.

### ZUSAMMENFASSUNG DER ERFINDUNG

Die vorliegende Offenbarung stellt einen Akustik-Emissionssensor nach Anspruch 1 bereit.

Gemäß einem Aspekt umfasst der Akustik-Emissionssensor einen optischen Resonator mit einem Sensorbereich konfiguriert für Reflexionsbetrieb; einen Lichtwellenleiter, der optisch an den optischen Resonator gekoppelt ist; eine Lichtquelle, die optisch an den Lichtwellenleiter gekoppelt ist, zum Beaufschlagen des Lichtwellenleiters mit Licht; und eine Detektionseinrichtung, die optisch an den Lichtwellenleiter gekoppelt ist, zum Detektieren von Licht aus dem optischen Resonator, wobei der Sensorbereich des optischen Resonators eine Kopplungseinrichtung zum mechanischen Koppeln an ein Festkörper-Messobjekt umfasst, wobei die Kopplungseinrichtung ein erstes Kopplungselement zur Übertragung eines Akustik-Emissionssignals zwischen dem Sensorbereich und dem Festkörper-Messobjekt und mindestens ein zweites Kopplungselement umfasst, wobei das zweite Kopplungselement zum Positionieren der Kopplungseinrichtung an dem Festkörper-Messobjekt konfiguriert ist und/oder wobei das zweite Kopplungselement als Filter für das Akustik-Emissionssignal wirkt. Das erste Kopplungselement weist eine höhere Steifigkeit als das zweite Kopplungselement auf.

Gemäß einem weiteren Aspekt wird ein hierin beschriebener Akustik-Emissionssensor zum Durchführen einer Messung an einem Messobjekt in einer explosionsgefährdeten Umgebung und/oder zum Durchführen einer Messung an einem Messobjekt in einer Umgebung mit einer Temperatur im Bereich zwischen -40 °C und +100 °C und/oder zum Durchführen einer Messung an einem Messobjekt in einer chemisch korrosiven Umgebung verwendet.

Gemäß einem weiteren Aspekt wird eine Mehrzahl hierin beschriebener Akustik-Emissionssensoren zum Durchführen einer Messung an einer Mehrzahl von Messpunkten an einem Festkörper-Messobjekt zum Durchführen einer Messung an dem Messobjekt verwendet, wobei die Messung ein Bestimmen eines Ortes eines Schallereignisses umfasst.

Weitere Aspekte und Merkmale ergeben sich beispielsweise aus den Merkmalen der abhängigen Ansprüche.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:

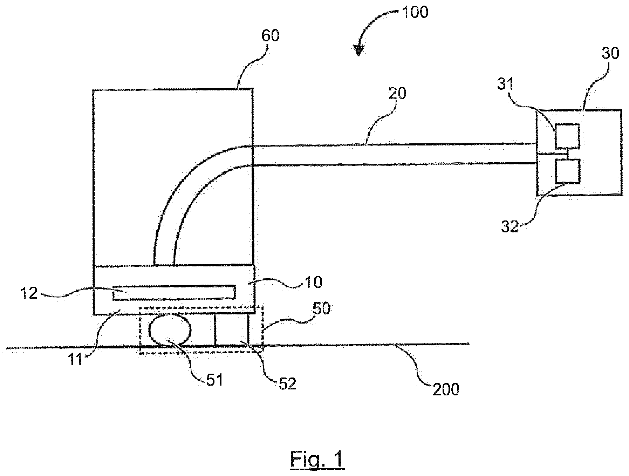

- Fig. 1: eine schematische Darstellung eines Akustik-Emissionssensors gemäß einer Ausführungsform.

### WEGE ZUM AUSFÜHREN DER ERFINDUNG

Nachstehend werden Ausführungsformen näher erläutert. Die Zeichnungen dienen der Veranschaulichung eines oder mehrerer Beispiele von Ausführungsformen.

Hierin beschriebene Ausführungsformen betreffen u. a. einen Akustik-Emissionssensor. Fig. 1 zeigt einen Akustik-Emissionssensor 100 gemäß einer Ausführungsform in einer schematischen Ansicht.

Ein Akustik-Emissionssensor 100, wie hierin beschrieben, wird beispielsweise verwendet, um das Schallereignis beim Entstehen von plastischen Verformungen, Rissen und/oder Schäden in oder an einem Messobjekt 200 zu detektieren. Solche Defekte können sich insbesondere bei kontinuierlicher Beanspruchung des Messobjekts 200 zu größeren Schäden auswachsen, welche schließlich zum Versagen des Messobjekts führen können.

Der Akustik-Emissionssensor 100 umfasst einen optischen Resonator 10. Der optische Resonator hat einen Sensorbereich 11 und ist für den Reflexionsbetrieb konfiguriert. Im Reflexionsbetrieb tritt das Licht auf der gleichen Seite des optischen Resonators 10 aus, auf welcher es auch in den optischen Resonator 10 eingetreten ist.

Der Akustik-Emissionssensor 100 umfasst des Weiteren einen Lichtwellenleiter 20, der optisch an den optischen Resonator 10 gekoppelt ist und zum Einleiten des Lichts in den optischen Resonator 10 sowie zum Herausführen des Lichts aus dem optischen Resonator 10 dient.

Außerdem umfasst der Akustik-Emissionssensor 100 eine Lichtquelle 31, welche optisch an den Lichtwellenleiter 20 gekoppelt ist und zum Beaufschlagen des Lichtwellenleiters 20 mit Licht konfiguriert ist. Ferner umfasst der Akustik-Emissionssensor 100 eine Detektionseinrichtung 32, die optisch an den Lichtwellenleiter 20 gekoppelt ist und zum Detektieren von Licht aus dem optischen Resonator 10 konfiguriert ist.

In der in Fig. 1 dargestellten Ausführungsform sind die Lichtquelle 31 und die Detektionseinrichtung 32 in einer Prüfeinrichtung 30 zusammengefasst; die Lichtquelle 31 und die Detektionseinrichtung 32 können aber auch separat vorgesehen sein. Die Lichtquelle 31 und die Detektionseinrichtung 32 sind über einen geeigneten Strahlteiler an das gleiche Ende des Lichtwellenleiters 20 gekoppelt.

Das in den optischen Resonator 10 eingekoppelte Licht von der Lichtquelle 31 ist in Wellenlänge und Intensität dazu geeignet, eine optische Resonanz in dem optischen Resonator 10 zu erzeugen. Eine mechanische Auslenkung des Sensorbereichs 11 des optischen Resonators durch ein Schallereignis (ein Acoustic-Emission-Ereignis oder Körperschallereignis) führt zu einer Veränderung der Resonanzeigenschaften, welche in dem Licht detektierbar sind, das aus dem optischen Resonator 10 austritt und durch den Lichtwellenleiter 20 der Detektionseinrichtung 32 zugeführt wird. Der Sensorbereich 11 des optischen Resonators ist typischerweise eine Membran des optischen Resonators, deren Auslenkung zu einer Veränderung der Resonanzeigenschaften des optischen Resonators 11 führt. Die Detektionseinrichtung 32 ist dazu konfiguriert, eine solche Veränderung der Resonanzeigenschaften zu detektieren und für eine Auswertung zugänglich zu machen.

Der optische Resonator 10 ist ein extrinsischer Resonator mit einer offenen oder mit einer geschlossenen Kavität. Eine offene Kavität hat die Eigenschaft, dass ein veränderlicher Umgebungsdruck, der auf den Sensorbereich 11 wirkt, nicht zu einem Offsetwert führt, der bei der Bewertung der Resonanzeigenschaften des optischen Resonators 10 berücksichtigt werden müsste.

Der Sensorbereich 11 des optischen Resonators 10 umfasst eine Kopplungseinrichtung 50 zum mechanischen Koppeln an ein Festkörper-Messobjekt 200. Ein Festkörper-Messobjekt 200 ist beispielsweise eine mechanische Struktur, typischerweise eine mechanische Struktur, welche dynamischen Belastungen ausgesetzt ist.

Die Kopplungseinrichtung 50 umfasst ein erstes Kopplungselement 51 und mindestens ein zweites Kopplungselement 52. Das erste Kopplungselement 51 ist konfiguriert zum Ausbilden oder Herstellen einer ersten Verbindung mit dem Festkörper-Messobjekt 200. Außerdem ist das erste Kopplungselement 51 zur Übertragung eines Akustik-Emissionssignals oder Körperschallsignals, das sich in dem Festkörper-Messobjekt 200 zur Kopplungsposition mit dem ersten Kopplungselement 51 ausbreitet, auf den Sensorbereich 11 konfiguriert. Das erste Kopplungselement 51 dient zur Signalübertragung zwischen dem Festkörper-Messobjekt 200 und dem Sensorbereich 11.

Das mindestens eine zweite Kopplungselement 52 ist konfiguriert zum Ausbilden oder Herstellen einer zweiten Verbindung mit dem Festkörper-Messobjekt 200. Das mindestens eine zweite Kopplungselement 52 dient zum Positionieren der Kopplungseinrichtung 50 an dem Festkörper-Messobjekt 200. Alternativ oder zusätzlich dient das zweite Kopplungselement 52 als Filter für das Akustik-Emissionssignal oder Körperschallsignal, typischerweise als Tiefpassfilter.

Die erste Verbindung und die zweite Verbindung definieren unterschiedliche Freiheitsgrade bei der Kopplung zwischen dem jeweiligen Kopplungselement 51, 52 und dem Festkörper-Messobjekt 200. Die erste Verbindung definiert beispielsweise nur einen translatorischen Freiheitsgrad zur Übertragung eines akustischen Ereignisses senkrecht zu dem Sensorbereich 11 und/oder senkrecht zu der Oberfläche des Festkörper-Messobjekts 200, an welcher die Kopplung erfolgen soll. Die zweite Verbindung definiert beispielsweise die translatorischen Freiheitsgrade parallel zu dem Sensorbereich 11 und/oder parallel zu der Oberfläche des Festkörper-Messobjekts 200.

Das mindestens eine zweite Kopplungselement 52 ist typischerweise derart zu dem ersten Kopplungselement 51 angeordnet, dass die Kopplung zwischen dem Sensorbereich 11 und dem Festkörper-Messobjekt 200 in einer mechanischen Parallelschaltung aus dem ersten Kopplungselement 51 und dem zweiten Kopplungselement 52 erfolgt. Bei einer mechanischen Parallelschaltung wirkt das erste Kopplungselement 51 mechanisch parallel zu dem zweiten Kopplungselement 52. Das mindestens eine zweite Kopplungselement 52 ist dazu beispielsweise neben dem ersten Kopplungselement 51 angeordnet.

Typischerweise weist das erste Kopplungselement 51 eine höhere Steifigkeit als das zweite Kopplungselement 52 auf. Das erste Kopplungselement 51 ist so ausgebildet, dass eine sehr feste oder steife bzw. direkte Kopplung mit einer Oberfläche des Festkörper-Messobjekts 200 ermöglicht wird. Der Sensorbereich 11 des optischen Resonators 10 kann so die Körperschallwellen in dem Messobjekt 200 erfassen, welche beispielsweise durch auftretende bzw. entstehende Mikrorisse in dem Messobjekt 200 als eine zu überwachende Struktur auftreten.

Bei Ausführungsformen beträgt das Verhältnis der Schubsteifigkeit des ersten Kopplungselements 51 zu der Schubsteifigkeit des zweiten Kopplungselements 52 bei einer Temperatur von 20° C mehr als 50.000, typischerweise mehr als 80.000 oder mehr als 100.000. Das erste Kopplungselement 51 ist zumindest in der Kompressionsrichtung zwischen dem optischen Resonator 10 und dem Messobjekt 200 sehr viel steifer als das zweite Kopplungselement 52. Beispielsweise ist das erste Kopplungselement 51 aus Glas gebildet. Das zweite Kopplungselement 52 ist beispielsweise aus einem Gummimaterial gebildet.

Das zweite Kopplungselement 52 kann an dem Sensorbereich 11 verklebt sein. Es kann auch an der Oberfläche des Messobjekts 200 bzw. bei einem vorhandenen Gehäuse an der Oberfläche des Gehäuses verklebt sein. Das im Verhältnis zu dem ersten Kopplungselement 51 sehr nachgiebige zweite Kopplungselement 52 kann dadurch einen direkten und sicheren Kontakt zwischen dem Messobjekt 200 und dem Sensorbereich 11 unter Zwischenordnung des ersten Kopplungselements 51 schaffen, so dass Körperschallsignale in dem Messobjekt sehr genau von dem optischen Resonator 10 erfasst werden können.

Das erste Kopplungselement 51 weist typischerweise eine geringe Kontaktfläche für den Kontakt mit dem Festkörper-Messobjekt 200 auf. Mit anderen Worten: Bei Ausführungsformen hat das erste Kopplungselement 51 eine Form, welche eine näherungsweise punktförmige Auflagefläche zum Sensorbereich 11 und/oder zum Festkörper-Messobjekt 200 ausbildet Der Akustik-Emissionssensor 100 kann so nahezu punktförmig an das Festkörper-Messobjekt 200 angebunden werden, und es kann eine nahezu punktweise Messung eines Schallereignisses vorgenommen werden.

Beispiele für eine Form für eine näherungsweise punktförmige Auflagefläche sind eine Kugelform, eine Sphäroid-Form, eine Zylinder-Form, eine Vierkant-Form. Bei der Schnittansicht in Fig. 1 ist das steife Kopplungselement 51 sphäroidförmig ausgebildet. Eine passende Formgebung ermöglicht eine besonders steife Ankopplung des optischen Resonators 10 an das Messobjekt 200.

Das zweite Kopplungselement 52 ist typischerweise extrem nachgiebig bzw. weich im Vergleich zu dem ersten Kopplungselement 51 ausgebildet. Das zweite Kopplungselement 52 fungiert als Tiefpassfilter und überträgt im Wesentlichen keine Körperschallwellen in einem höheren Frequenzbereich. Mittels des zweiten Kopplungselements 52 kann die Sensorfläche des optischen Resonators 10 sicher und zuverlässig gehalten werden, wobei der direkte oder punktförmige Charakter der Messung durch das zweite Kopplungselement 52 im Wesentlichen nicht verändert wird.

Neben einer direkten Ankopplung an eine Oberfläche des Messobjekts 200 ist es auch möglich, dass die Kopplungseinrichtung 50 zum indirekten mechanischen Koppeln des Sensorbereichs 11 an das Messobjekt 200 dient. Beispielsweise ist ein Gehäuse vorgesehen, welches zumindest den optischen Resonator 10 und die Kopplungseinrichtung 50 umgibt und an welches das erste Kopplungselement 51 und das zweite Kopplungselement 52 angekoppelt sind. Eine Fläche des Gehäuses, die im Wesentlichen parallel zu der Fläche des Sensorbereichs 11 des optischen Resonators verläuft, ist dann wiederum steif an eine Oberfläche des Messobjekts 200 koppelbar. Auch dann kann eine Messung in einem Bereich mit vergleichsweise kleiner räumlicher Ausdehnung durchgeführt werden, wobei die Sensorfläche des optischen Resonators 10 von dem zweiten Kopplungselement 52 sicher und zuverlässig gehalten wird.

Das Messprinzip des hierin beschriebenen Akustik-Emissionssensors 100 ist rein optisch. Dadurch sind lange Signalübertragungsstrecken möglich, wie sie z. B. bei einer Verwendung des Akustik-Emissionssensors 100 an einem räumlich ausgedehnten bzw. weit von der Detektionseinrichtung 32 entfernten Festkörper-Messobjekt 200 auftreten können. Die Größe und das Gewicht des hierin beschriebenen Akustik-Emissionssensors 100 sind vergleichsweise gering, was Kosten- und Handhabungsvorteile ergeben kann. Der hierin beschriebene Akustik-Emissionssensor 100 ist sehr überlastfest bei gleichzeitig hoher Empfindlichkeit und hoher Eigenfrequenz, was einen großen Anwendungsbereich des Akustik-Emissionssensors 100 ergibt. Ein hierin beschriebener extrinsischer Akustik-Emissionssensor 100 ist mechanisch steif mit dem Messobjekt 200 koppelbar. Er erfasst damit Körperschallwellen mit hoher Bandbreite und mit hoher Sensitivität.

Bei Ausführungsformen umfasst der optische Resonator 10 einen Fabry-Pérot-Resonator. Licht aus dem Lichtwellenleiter 20 tritt in eine Kavität des Fabry-Pérot-Resonators ein und durchstrahlt die Kavität. Die Kavität kann offen oder geschlossen ausgebildet sein. Das Licht wird an dem Sensorbereich 11, typischerweise einer Sensormembran, reflektiert. Die Seite, auf welcher das Licht in die Kavität 12 aus dem Lichtwellenleiter 20 eintritt, und die Seite des Sensorbereichs der Kavität 12 bilden also einen optischen Fabry-Pérot-Resonator. Teile des Lichts, das die Kavität 12 ggf. mehrfach durchlaufen hat, werden wiederum in den Lichtwellenleiter 20 in Richtung der Detektionseinrichtung 32 zurückgeworfen.

In dem zurückgeworfenen Licht wird ein Interferenzspektrum ausgebildet, welches Minima und Maxima aufweist, welche mittels der Detektionseinrichtung 32 detektiert werden können. Die Lage der Minima und Maxima ist abhängig von der Länge der Kavität 12. Die Länge der Kavität 12 wird durch eine Auslenkung des Sensorbereichs 11 verändert. Eine Auslenkung des Sensorbereichs 11 erfolgt bei dem Akustik-Emissionssensor 100, der an ein Festkörper-Messobjekt 200 gekoppelt ist, beispielsweise wenn ein Körperschallereignis in dem Messobjekt 200 auftritt. Ein Körperschallereignis kann ein transientes Ereignis sein und als transientes Ereignis detektiert werden. Ein solches transientes Ereignis kann beispielsweise entstehen, wenn eine plötzliche strukturelle Änderung in dem Messobjekt 200 auftritt. Beispiele für eine plötzliche strukturelle Änderung sind plötzliche plastische Verformungen, plötzlich auftretende Risse oder Mikrorisse und dergleichen.

Bei Ausführungsformen ist der optische Resonator 10 mit im Wesentlichen senkrecht zu einer Oberfläche des Festkörper-Messobjekts 200 ausgerichtetem Sensorbereich 11 an die Oberfläche koppelbar. Die Kopplung des Sensorbereichs 11 erfolgt gemäß der Ausführungsform also oberflächennormal zum Festkörper-Messobjekt. Hierdurch kann sich eine verbesserte Signalgüte ergeben, da typischerweise ein für auftretende Schäden und dergleichen maßgebliches Körperschallereignis ebenfalls zu einer im Wesentlichen senkrechten Auslenkung der Oberfläche führt.

Bei Ausführungsformen ist das steife Kopplungselement 51 im zentralen Bereich des Sensorbereichs 11 des optischen Resonators 10 angeordnet. Der Sensorbereich 11 bildet eine Reflexionsfläche für den optischen Resonator 10. Als zentraler Bereich wird ein Bereich des Sensorbereichs 11 verstanden, welcher in der Umgebung des Mittelpunkts der Kavität 12 in der Detektionsebene des Sensorbereichs 11 liegt. In der Darstellung gemäß Fig. 1 ist das steife Kopplungselement 51 im Wesentlichen im zentralen Bereich des Sensorbereichs 11 angeordnet.

Bei Ausführungsformen ist der Akustik-Emissionssensor 100 im Wesentlichen metallfrei ausgebildet. Typischerweise sind zumindest der optische Resonator 10 und ein Großteil des Bereichs des Lichtwellenleiters 20 inklusive einem ggf. vorhandenen Gehäuse dafür metallfrei ausgebildet. Eine Metallfreiheit kann durch die Verwendung eines geeigneten Materials für das erste Kopplungselement 51, wie z. B. Glas, begünstigt werden. Ein im Wesentlichen metallfreier Akustik-Emissionssensor 100 verringert ggf. störende oder das Messergebnis verfälschende Einflüsse, die von elektromagnetischen Wechselwirkungen herrühren. Die elektromagnetische Verträglichkeit des Akustik-Emissionssensors 100 kann dadurch verbessert sein. Ebenfalls kann ein im Wesentlichen metallfreier Akustik-Emissionssensor 100, dessen Messprinzip rein optisch ist, einen Einsatz in explosionsgefährdeten Umgebungen wie z. B. zur Leckdetektion an Gasleitungen oder dergleichen ermöglichen.

Bei Ausführungsformen umfasst der Akustik-Emissionssensor 100 ferner eine Trägheitsmasse 60. Eine Trägheitsmasse 60 ist typischerweise im Bereich der Seite des optischen Resonators 10 angeordnet, auf welcher der Lichtwellenleiter 20 mit dem optischen Resonator 10 optisch gekoppelt ist. Wenn eine Auslenkung (eine Kompressions- und Relaxationsbewegung) des Sensorbereichs 11 infolge eines Körperschallereignisses auftritt, kann die Trägheitsmasse 60 dazu beitragen, eine Bewegung des optischen Resonators 10 insgesamt zu dämpfen. Im Ergebnis nimmt die Stärke der Auslenkung des Sensorbereichs 11 zu, was die Ansprechempfindlichkeit des Akustik-Emissionssensors 100 für Körperschallereignisse in dem Messobjekt 200 verbessert.

Gemäß einer Ausführungsform wird ein hierin beschriebener Akustik-Emissionssensor 100 zum Durchführen einer Messung an einem Messobjekt 200 in einer explosionsgefährdeten Umgebung verwendet. Das optische Messprinzip in dem optischen Resonator 10 des Akustik-Emissionssensors 100 und ggf. eine Metallfreiheit eines hierin beschriebenen Akustik-Emissionssensors 100 ermöglichen eine Verwendung auch in einer explosionsgefährdeten Umgebung wie z. B. an einer Leitung, welche ein brennbares Gas führt. oder dergleichen.

Gemäß einer Ausführungsform wird ein hierin beschriebener Akustik-Emissionssensor 100 zum Durchführen einer Messung an einem Messobjekt 200 in einem Temperaturbereich zwischen -40 °C und +100 °C durchgeführt. Herkömmliche Sensoren können Komponenten enthalten, welche nicht für eine Verwendung zum Durchführen einer Messung in der gesamten Spanne eines solchen Temperaturbereiches geeignet sind. Beispielsweise können solche Komponenten nicht hochtemperaturbeständig sein, oder die herkömmlichen Sensoren können hinsichtlich ihrer Messgenauigkeit empfindlich gegenüber einer Temperatureinwirkung sein. Das Prinzip und der Aufbau eines hierin beschriebenen Akustik-Emissionssensors 100 ermöglichen eine Verwendung auch in einem Temperaturbereich mit einer vergleichsweise großen Temperaturspanne von -40 °C bis 100 °C.

Gemäß einer Ausführungsform wird ein hierin beschriebener Akustik-Emissionssensor 100 zum Durchführen einer Messung an einem Messobjekt 200 in einer chemisch korrosiven Umgebung verwendet. Ein Beispiel für eine chemisch korrosive Umgebung umfasst ein saures Milieu mit einem besonders niedrigen pH-Wert oder ein alkalisches Milieu mit einem besonders hohen pH-Wert. Beispiele für eine chemisch korrosive Umgebung umfassen auch solche Umgebungen bzw. Materialkombinationen, bei welchen ein herkömmlicher, nicht-metallfreier Sensor eine korrosive Reaktion zeigt. Insbesondere bei einem im Wesentlichen metallfrei ausgebildeten Akustik-Emissionssensor 100 ergibt sich dadurch eine Erweiterung des Anwendungsspektrums.

Gemäß einer Ausführungsform wird eine Mehrzahl hierin beschriebener Akustik-Emissionssensoren 100 an einer Mehrzahl von Messpunkten an einem Festkörper-Messobjekt 200 zum Durchführen einer Messung an dem Messobjekt 200 verwendet. Die Messung umfasst ein Bestimmen eines Ortes eines akustischen Ereignisses. Durch eine Verwendung mehrerer Akustik-Emissionssensoren 100 und die Detektion von Körperschallereignissen an einer Mehrzahl von Messpunkten können beispielsweise Schäden an größeren Messobjekten 200 lokalisiert werden, was eventuelle Wartungs- oder Reparaturarbeiten beschleunigen kann.

Obwohl vorstehend typische Ausführungsbeispiele beschrieben wurden, ist die Offenbarung auf vielfältige Weise modifizierbar. Der Gegenstand des Schutzbegehrens ist in den Patentansprüchen angegeben.

## Patentansprüche

1. Akustik-Emissionssensor (100), umfassend:
einen optischen Resonator (10) mit einem Sensorbereich (11) konfiguriert für Reflexionsbetrieb;
einen Lichtwellenleiter (20), der optisch an den optischen Resonator (10) gekoppelt ist;
eine Lichtquelle (31), die optisch an den Lichtwellenleiter (20) gekoppelt ist, zum Beaufschlagen des Lichtwellenleiters (20) mit Licht;
eine Detektionseinrichtung (32), die optisch an den Lichtwellenleiter (20) gekoppelt ist, zum Detektieren von Licht aus dem optischen Resonator (10),
wobei der Sensorbereich (11) des optischen Resonators (10) eine Kopplungseinrichtung (50) zum mechanischen Koppeln an ein Festkörper-Messobjekt (200) umfasst,
wobei die Kopplungseinrichtung (50) ein erstes Kopplungselement (51) zur Übertragung eines Akustik-Emissionssignals zwischen dem Sensorbereich (11) und dem Festkörper-Messobjekt (200) umfasst,
charakterisiert dadurch, dass die Kopplungseinrichtung (50) mindestens ein zweites Kopplungselement (52) umfasst, wobei das erste Kopplungselement (51) eine höhere Steifigkeit als das zweite Kopplungselement (52) aufweist,
wobei das zweite Kopplungselement (52) zum Positionieren der Kopplungseinrichtung (50) an dem Festkörper-Messobjekt (200) konfiguriert ist und/oder wobei das zweite Kopplungselement (52) als Filter für das Akustik-Emissionssignal wirkt.

2. Akustik-Emissionssensor (100) nach Anspruch 1,
wobei das Verhältnis der Schubsteifigkeit des ersten Kopplungselements (51) zu der Schubsteifigkeit des zweiten Kopplungselements (52) bei 20° C größer als 50.000, typischerweise größer als 80.000 oder größer als 100.000 ist.

3. Akustik-Emissionssensor (100) nach einem der vorhergehenden Ansprüche,
wobei das mindestens eine zweite Kopplungselement (52) derart angeordnet ist, dass es mechanisch parallel zu dem ersten Kopplungselement (51) wirkt.

4. Akustik-Emissionssensor (100) nach einem der vorhergehenden Ansprüche,
wobei das erste Kopplungselement (51) eine Form hat, welche eine näherungsweise punktförmige Auflagefläche zum Sensorbereich (11) und/oder zum Festkörper-Messobjekt (200) ausbildet.

5. Akustik-Emissionssensor (100) nach einem der vorhergehenden Ansprüche,
wobei der optische Resonator (10) einen Fabry-Perot-Resonator umfasst.

6. Akustik-Emissionssensor (100) nach einem der vorhergehenden Ansprüche,
wobei der optische Resonator (10) mit im Wesentlichen senkrecht zu einer Oberfläche des Festkörper-Messobjekts (200) ausgerichtetem Sensorbereich (11) an die Oberfläche koppelbar ist.

7. Akustik-Emissionssensor (100) nach einem der vorhergehenden Ansprüche,
wobei das erste Kopplungselement (51) im zentralen Bereich des Sensorbereichs (11) angeordnet ist.

8. Akustik-Emissionssensor (100) nach einem der vorhergehenden Ansprüche,
wobei der Akustik-Emissionssensor (100) im Wesentlichen metallfrei ausgebildet ist.

9. Akustik-Emissionssensor (100) nach einem der vorhergehenden Ansprüche,
wobei der Akustik-Emissionssensor (100) ferner eine Trägheitsmasse (60) umfasst.

10. Verwendung eines Akustik-Emissionssensors (100) nach einem der Ansprüche 1 bis 9 zum Durchführen einer Messung an einem Messobjekt (200) in einer explosionsgefährdeten Umgebung und/oder
zum Durchführen einer Messung an einem Messobjekt (200) in einer Umgebung mit einer Temperatur im Bereich zwischen -40 °C und +100 °C und/oder
zum Durchführen einer Messung an einem Messobjekt (200) in einer chemisch korrosiven Umgebung.

11. Verwendung einer Mehrzahl von Akustik-Emissionssensoren (100) nach einem der Ansprüche 1 bis 9 an einer Mehrzahl von Messpunkten an einem Festkörper-Messobjekt (200) zum Durchführen einer Messung an dem Messobjekt (200), wobei die Messung ein Bestimmen eines Ortes eines Schallereignisses umfasst.

## Claims

1. An acoustic emission sensor (100), comprising:
an optical resonator (10) having a sensor portion (11) and configured for reflection operation;
an optical waveguide (20), which is optically coupled to the optical resonator (10);
a light source (31), which is optically coupled to the optical waveguide (20) for acting upon the optical waveguide (20) with light;
a detection device (32), which is optically coupled to the optical waveguide (20) for detecting light from the optical resonator (10),
wherein the sensor portion (11) of the optical resonator (10) comprises a coupling device (50) for mechanically coupling to a solid-state measurement object (200),
wherein the coupling device (50) comprises a first coupling element (51) for transmitting an acoustic emission signal between the sensor portion (11) and the solid-state measurement object (200),
**characterized in that** the coupling device (50) comprises at least one second coupling element (52), wherein the first coupling element (51) has a higher stiffness than the second coupling element (52),
wherein the second coupling element (52) is configured for positioning the coupling device (50) on the solid-state measurement object (200), and/or wherein the second coupling element (52) acts as a filter for the acoustic emission signal.

2. The acoustic emission sensor (100) according to claim 1,
wherein the ratio of the shear stiffness of the first coupling element (51) to the shear stiffness of the second coupling element (52) at 20°C is more than 50,000, typically more than 80,000 or more than 100,000.

3. The acoustic emission sensor (100) according to any one of the preceding claims,
wherein the at least one second coupling element (52) is arranged such that it acts mechanically in parallel to the first coupling element (51).

4. The acoustic emission sensor (100) according to any one of the preceding claims,
wherein the first coupling element (51) has a shape, which forms an approximately punctiform contact surface to the sensor portion (11) and/or to the solid-state measurement object (200).

5. The acoustic emission sensor (100) according to any one of the preceding claims,
wherein the optical resonator (10) comprises a Fabry-Perot resonator.

6. The acoustic emission sensor (100) according to any one of the preceding claims,
wherein the optical resonator can be coupled, with the sensor portion (11) substantially oriented to be perpendicular to a surface of the solid-state measurement object (200), to the surface.

7. The acoustic emission sensor (100) according to any one of the preceding claims,
wherein the first coupling element (51) is arranged in the central area of the sensor portion (11).

8. The acoustic emission sensor (100) according to any one of the preceding claims,
wherein the acoustic emission sensor (100) is formed to be substantially free from metal.

9. The acoustic emission sensor (100) according to any one of the preceding claims,
wherein the acoustic emission sensor (100) furthermore comprises an inertial mass (60).

10. Use of an acoustic emission sensor (100) according to any one of claims 1 to 9
for performing a measurement on a measurement object (200) in an explosion-prone environment, and/or
for performing a measurement on a measurement object (200) in an environment having a temperature in the range between -40°C and +100°C, and/or
for performing a measurement on a measurement object (200) in a chemically corrosive environment.

11. Use of a plurality of acoustic emission sensors (100) according to any one of claims 1 to 9 on a plurality of measurement points on a solid-state measurement object (200) for performing a measurement on the measurement object (200), wherein the measurement comprises determining a site of a sound event.

## Revendications

1. Capteur d'émissions acoustiques (100), comprenant :
un résonateur optique (10) présentant une zone de capteur (11) et configuré pour fonctionner par réflexion ;
un guide d'onde optique (20) qui est couplé optiquement au résonateur optique (10) ;
une source de lumière (31) qui est couplée optiquement au guide d'onde optique (20) pour solliciter le guide d'onde optique (20) avec de la lumière ;
un dispositif de détection (32) qui est couplé optiquement au guide d'onde optique (20) pour détecter de la lumière provenant du résonateur optique (10),
sachant que la zone de capteur (11) du résonateur optique (10) comprend un dispositif de couplage (50) pour le couplage mécanique à un objet de mesure à corps solide (200),
sachant que le dispositif de couplage (50) comprend un premier élément de couplage (51) pour la transmission d'un signal d'émissions acoustiques entre la zone de capteur (11) et l'objet de mesure à corps solide (200),
**caractérisé en ce que** le dispositif de couplage (50) comprend au moins un deuxième élément de couplage (52), sachant que le premier élément de couplage (51) présente une rigidité supérieure au deuxième élément de couplage (52),
sachant que le deuxième élément de couplage (52) est configuré pour positionner le dispositif de couplage (50) au niveau de l'objet de mesure à corps solide (200) et/ou sachant que le deuxième élément de couplage (52) agit comme filtre pour le signal d'émissions acoustiques.

2. Capteur d'émissions acoustiques (100) selon la revendication 1,
sachant que le rapport de la rigidité en poussée du premier élément de couplage (51) à la rigidité en poussée du deuxième élément de couplage (52) à 20° C est supérieur à 50 000, typiquement supérieur à 80 000 ou supérieur à 100 000.

3. Capteur d'émissions acoustiques (100) selon l'une des revendications précédentes,
sachant que l'au moins un deuxième élément de couplage (52) est disposé de manière à agir mécaniquement parallèlement au premier élément de couplage (51).

4. Capteur d'émissions acoustiques (100) selon l'une des revendications précédentes,
sachant que le premier élément de couplage (51) a une forme qui constitue une face d'appui approximativement en forme de point par rapport à la zone de capteur (11) et/ou à l'objet de mesure à corps solide (200).

5. Capteur d'émissions acoustiques (100) selon l'une des revendications précédentes,
sachant que le résonateur optique (10) comprend un résonateur de Fabry-Pérot.

6. Capteur d'émissions acoustiques (100) selon l'une des revendications précédentes,
sachant que le résonateur optique (10) peut, la zone de capteur (11) étant orientée de manière sensiblement perpendiculaire à une surface de l'objet de mesure à corps solide (200), être couplé à la surface.

7. Capteur d'émissions acoustiques (100) selon l'une des revendications précédentes,
sachant que le premier élément de couplage (51) est disposé dans la zone centrale de la zone de capteur (11).

8. Capteur d'émissions acoustiques (100) selon l'une des revendications précédentes,
sachant que le capteur d'émissions acoustiques (100) est constitué de manière sensiblement exempte de métal.

9. Capteur d'émissions acoustiques (100) selon l'une des revendications précédentes,
sachant que le capteur d'émissions acoustiques (100) comprend en outre une masse d'inertie (60).

10. Utilisation d'un capteur d'émissions acoustiques (100) selon l'une des revendications 1 à 9
pour l'exécution d'une mesure au niveau d'un objet de mesure (200) dans un environnement à risque d'explosion et/ou
pour l'exécution d'un mesure au niveau d'un objet de mesure (200) dans un environnement à une température comprise entre -40 °C et +100 °C et/ou
pour l'exécution d'une mesure au niveau d'un objet de mesure (200) dans un environnement chimiquement corrosif.

11. Utilisation d'une pluralité de capteurs d'émissions acoustiques (100) selon l'une des revendications 1 à 9 en une pluralité de points de mesure au niveau d'un objet de mesure à corps solide (200) pour l'exécution d'une mesure au niveau de l'objet de mesure (200), sachant que la mesure comprend une détermination d'un emplacement d'un événement acoustique.
